# EUROPEAN PATENT APPLICATION

(11) **EP 4 404 431 A1**
(43) Date of publication of application: **24.07.2024**
(21) Application number: 22924357.1
(22) Date of filing: 29.11.2022
(51) Int. Cl.: H02J 50/90, H02J 50/80, H02J 50/40, H02J 50/10, H02J 7/00, G06F 3/04817

(54) **WIRELESS CHARGING GUIDE PROVIDING METHOD AND ELECTRONIC DEVICE PERFORMING SAME**

(30) Priority: 25.01.2022 KR 20220010759; 25.02.2022 KR 20220025228
(71) Applicant: Samsung Electronics Co., Ltd., Suwon-si, Gyeonggi-do 16677 (KR)
(72) Inventor: KANG, Seokyoung, Suwon-si Gyeonggi-do 16677 (KR); CHEON, Kawon, Suwon-si Gyeonggi-do 16677 (KR); SHIN, Jaesun, Suwon-si Gyeonggi-do 16677 (KR); JUNG, Jongwoo, Suwon-si Gyeonggi-do 16677 (KR)
(74) Representative: Gulde & Partner
(86) International application number: PCT/KR2022/019078
(87) International publication number: WO 2023/146104

(57) **Abstract**

Disclosed is a wireless charging guide providing method and/or an electronic device performing same. The electronic device comprises a processor and a memory for storing instructions to be executed by the processor, wherein, when the instructions are executed by the processor, the processor may determine whether the electronic device is in a charging area of a wireless charger, if it is determined that the electronic device is in the charging area, then identify at least one external electronic device that is currently connected to the electronic device or has a record of being previously connected to the electronic device, obtain battery charging state information of the identified at least one external electronic device, and output a charging guide interface for the identified at least one external electronic device, on the basis of a chargeable state of the wireless charger and the obtained battery charging state information.

## Description

### BACKGROUND

### 1. Field

Certain example embodiments relate to a technology for providing a wireless charging guide and/or technique.

### 2. Description of Related Art

Wireless power transmission is a technology for transmitting power to a load without using a wire. Wireless power may refer to energy transferred from a wireless power transmitter to a wireless power receiver via magnetic coupling. A wireless charger, which is a wireless power transmitter, may transmit power to a wireless power receiver such as an electronic device and an external electronic device that may be connected to the electronic device.

Magnetic coupling or resonant coupling may be formed between a source resonator of the wireless charger and a target resonator of the electronic device, and between a source resonator of the wireless charger and a target resonator of the external electronic device.

### SUMMARY

In order to check remaining battery power of an external electronic device that may be wirelessly connected to an electronic device, it may be necessary and/or desirable to connect the external electronic device to the electronic device and check each external electronic device individually, which may reduce usability.

Certain example embodiments provide a method of providing a wireless charging guide and an electronic device performing the same that may improve convenience by acquiring battery charge state information for an external electronic device connected to the electronic device and an external electronic device not connected to the electronic device when the electronic device is being wirelessly charged, and by providing a charging guide interface related to the charging of the external electronic device based on the battery charge state information.

According to an example embodiment, an electronic device may include a processor, and a memory configured to store instructions executable by the processor, wherein, when the instructions are executed by the processor, the processor may be configured to determine whether the electronic device is in a charging area of a wireless charger, when it is determined that the electronic device is in the charging area, identify at least one external electronic device that is currently connected to the electronic device or has a record of being previously connected to the electronic device, acquire battery charge state information of the identified at least one external electronic device, and output a charging guide interface for the identified at least one external electronic device, based on a charge available state of the wireless charger and the acquired battery charge state information.

According to an example embodiment, a wireless charger may include a power transmitter configured to transmit power to an electronic device and an external electronic device that may be connected to the electronic device using at least one of a resonance charging method or an inductive charging method, a transceiver configured to communicate with the electronic device and the external electronic device, and a controller (comprising processing circuitry) configured to control the power transmitter and the transceiver, wherein the controller may be configured to receive a first request signal requesting transmission of battery charge state information of the external electronic device being charged by the wireless charger from the electronic device, transmit a second request signal requesting transmission of battery charge state information of the external electronic device to the external electronic device in response to the first request signal, receive the battery charge state information of the external electronic device from the external electronic device in response to the second request signal, and transmit the received battery charge state information to the electronic device.

According to an example embodiment, a method of providing a wireless charging guide may include determining whether an electronic device is in a charging area of a wireless charger, when it is determined that the electronic device is in the charging area, identifying at least one external electronic device that is currently connected to the electronic device or has a record of being previously connected to the electronic device, acquiring battery charge state information of the identified at least one external electronic device, and outputting a charging guide interface for the identified at least one external electronic device, based on a charge available state of the wireless charger and the acquired battery charge state information.

The method of providing a wireless charging guide and the electronic device performing the same may improve convenience by providing battery charge state information for an external electronic device connected to the electronic device and an external electronic device not connected to the electronic device when being wirelessly charged, and by providing a charging guide interface related to the charging of the external electronic device.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram illustrating an electronic device in a network environment according to an example embodiment;
FIG. 2 is a diagram illustrating a wireless charging environment in which a wireless charger may be used according to an example embodiment;
FIG. 3 is a flowchart illustrating a method of providing a wireless charging guide according to an example embodiment;
FIG. 4 is a diagram illustrating an example method of determining whether an electronic device is in a charging area of a wireless charger, according to an example embodiment;
FIG. 5 is a diagram illustrating an example method in which an electronic device acquires battery charge state information of an external electronic device, according to an example embodiment;
FIG. 6 is a diagram illustrating an example in which an electronic device acquires battery charge state information of an electronic device being charged via a wireless charger, according to an example embodiment;
FIG. 7 is a diagram illustrating an example in which an electronic device acquires battery charge state information by communicating with an external electronic device, according to an example embodiment;
FIG. 8 is a diagram illustrating a charge available state related to an amount of charging power that may be provided by a wireless charger according to an example embodiment;
FIG. 9 is a diagram illustrating a charge available state related to a remaining charging area of a wireless charger that supports magnetic inductive charging according to an example embodiment;
FIG. 10 is a diagram illustrating an operation in which an electronic device receives battery charge state information from an external electronic device connected to the electronic device, according to an example embodiment;
FIG. 11 is a diagram illustrating an operation in which an electronic device acquires battery charge state information of an external electronic device not connected to the electronic device, according to an example embodiment;
FIG. 12 is a diagram illustrating an operation in which an electronic device acquires battery charge state information of an external electronic device being charged via a wireless charger, according to an example embodiment;
FIG. 13 is a diagram illustrating an operation in which an electronic device communicates with a wireless charger and outputs a charging guide interface, according to an example embodiment;
FIGS. 14A to 14D are diagrams illustrating a charging guide interface for an external electronic device connected to an electronic device according to an example embodiment;
FIGS. 15A to 15D are diagrams illustrating a charging guide interface for an external electronic device not connected to the electronic device according to an example embodiment; and
FIGS. 16A to 16C are diagrams illustrating a charging guide interface output from an electronic device according to a charge available state of a wireless charger according to an example embodiment.

### DETAILED DESCRIPTION

Hereinafter, certain example embodiments will be described in detail with reference to the accompanying drawings. When describing the embodiments with reference to the accompanying drawings, like reference numerals refer to like elements and a repeated description related thereto will be omitted.

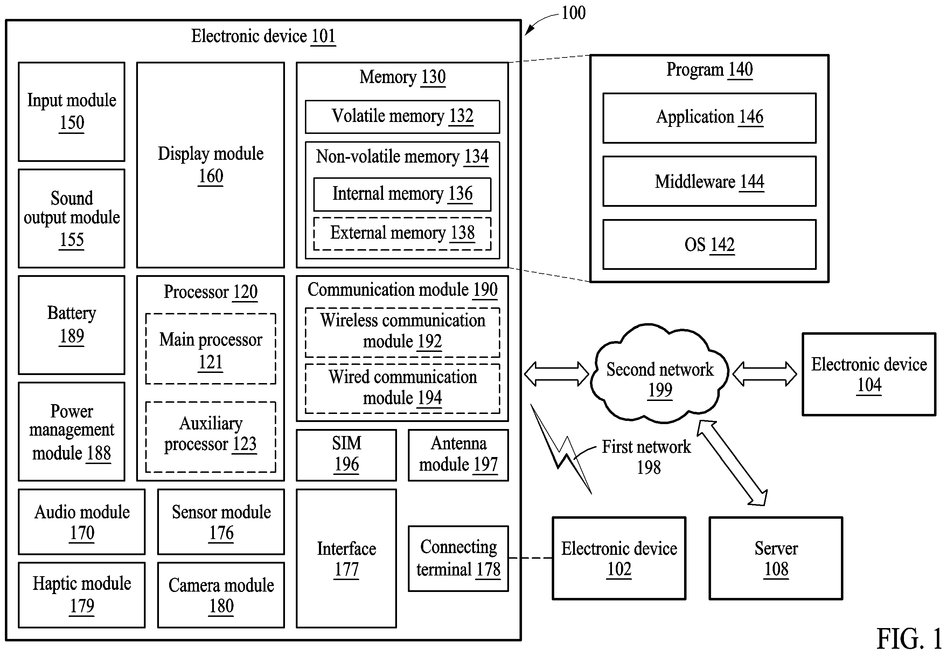

FIG. 1 is a block diagram illustrating an electronic device 101 in a network environment 100 according to an example embodiment. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an example embodiment, the electronic device 101 may communicate with the electronic device 104 via the server 108. According to an example embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an example embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134 (which may include internal memory 136 and/or external memory 138). According to an example embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one of the components (e.g., the display module 160, the sensor module 176, or the communication module 190) of the electronic device 101, instead of the main processor 121 while the main processor 121 is in an inactive (e.g., sleep) state or along with the main processor 121 while the main processor 121 is an active state (e.g., executing an application). According to an example embodiment, the auxiliary processor 123 (e.g., an ISP or a CP) may be implemented as a portion of another component (e.g., the camera module 180 or the communication module 190) that is functionally related to the auxiliary processor 123. According to an example embodiment, the auxiliary processor 123 (e.g., an NPU) may include a hardware structure specified for artificial intelligence (AI) model processing. An Al model may be generated through machine learning. Such machine learning may be performed by, for example, the electronic device 101, in which artificial intelligence is performed, or performed via a separate server (e.g., the server 108). Learning algorithms may include, but are not limited to, for example, supervised learning, unsupervised learning, semi-supervised learning, or reinforcement learning algorithms. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an example embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an example embodiment, the display module 160 may include a touch sensor adapted to sense a touch, or a pressure sensor adapted to measure an intensity of a force incurred by the touch.

The audio module 170 may convert a sound into an electric signal or vice versa. According to an example embodiment, the audio module 170 may acquire the sound via the input module 150 or output the sound via the sound output module 155 or an external electronic device (e.g., the electronic device 102 such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an example embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an example embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an example embodiment, the connecting terminal 178 may include, for example, an HDMI connector, a USB connector, an SD card connector, or an audio connector (e.g., a headphones connector).

The haptic module 179 may convert an electric signal into a mechanical stimulus (e.g., a vibration or a movement) or an electrical stimulus which may be recognized by a user via their tactile sensation or kinesthetic sensation. According to an example embodiment, the haptic module 179 may include, for example, a motor, a piezoelectric element, or an electric stimulator.

The camera module 180 may capture a still image and moving images. According to an example embodiment, the camera module 180 may include one or more lenses, image sensors, ISPs, or flashes.

The power management module 188 may manage power supplied to the electronic device 101. According to an example embodiment, the power management module 188 may be implemented as, for example, at least a part of a power management integrated circuit (PMIC).

The battery 189 may supply power to at least one component of the electronic device 101. According to an example embodiment, the battery 189 may include, for example, a primary cell which is not rechargeable, a secondary cell which is rechargeable, or a fuel cell.

The communication module 190, comprising communication circuitry, may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an example embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth', wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN))). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192, comprising communication circuitry, may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an example embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an example embodiment, the antenna module 197 may include an antenna including a radiating element including a conductive material or a conductive pattern formed in or on a substrate (e.g., a printed circuit board (PCB)). According to an example embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an example embodiment, another component (e.g., a radio frequency integrated circuit (RFIC)) other than the radiating element may be additionally formed as a part of the antenna module 197.

According to an example embodiment, the antenna module 197 may form a mmWave antenna module. According to an example embodiment, the mmWave antenna module may include a PCB, an RFIC disposed on a first surface (e.g., a bottom surface) of the PCB, or adjacent to the first surface of the PCB and capable of supporting a designated high-frequency band (e.g., a mmWave band), and a plurality of antennas (e.g., array antennas) disposed on a second surface (e.g., a top or a side surface) of the PCB, or adjacent to the second surface of the PCB and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example embodiment, commands or data may be transmitted or received between the electronic device 101 and the external electronic device 104 via the server 108 coupled with the second network 199. Each of the external electronic devices 102 and 104 may be a device of the same type as or a different type from the electronic device 101. According to an example embodiment, all or some of operations to be executed by the electronic device 101 may be executed at one or more external electronic devices (e.g., the external electronic devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer a result of the performing to the electronic device 101. The electronic device 101 may provide the result, with or without further processing of the result, as at least part of a response to the request. To that end, cloud computing, distributed computing, mobile edge computing (MEC), or clientserver computing technology may be used, for example. The electronic device 101 may provide ultra low-latency services using, e.g., distributed computing or MEC. In an example embodiment, the external electronic device 104 may include an Internet-of-things (IoT) device. The server 108 may be an intelligent server using machine learning and/or a neural network. According to an example embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

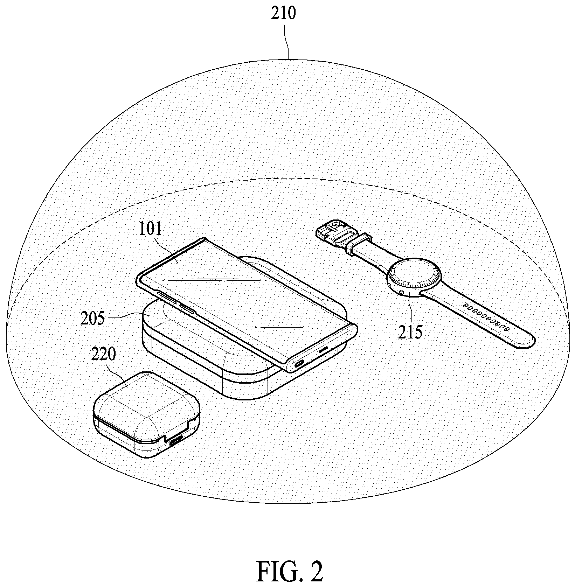

FIG. 2 is a diagram illustrating a wireless charging environment in which a wireless charger may be used according to an example embodiment.

Referring to FIG. 2, a wireless charger 205 wirelessly transmitting power to the electronic device 101 and an external electronic device that may be connected to the electronic device 101, the electronic device 101 receiving power from the wireless charger 205 within a charging area 210 of the wireless charger 205, and external electronic devices 215 and 220 such as earphones and a smartwatch that may be connected to the electronic device 101 are illustrated.

The wireless charger 205 may wirelessly transmit power to the electronic device 101 and an external electronic device using at least one of a magnetic inductive charging method and a magnetic resonance charging method. Wireless charging using the magnetic inductive charging method uses a magnetic induction phenomenon between a coil of a wireless power transmitter (e.g., the wireless charger 205) and a coil of a wireless power receiver (e.g., the electronic device 101, the external electronic device). That is, charging may be possible (e.g., only) when the wireless power transmitter and the wireless power receiver are located in close proximity. Wireless charging using the magnetic resonance charging method may be a method of transmitting power through magnetic resonance using a frequency of several MHz to several tens of MHz bands. Resonant coupling may be formed between a source resonator of a wireless power transmitter (e.g., the wireless charger 205) and a target resonator of a wireless power receiver (e.g., the electronic device 101, the external electronic device). The magnetic resonance charging method may transmit power over a longer distance than the magnetic inductive charging method.

For example, in an example of FIG. 2, the wireless charger 205 may transmit power to the electronic device 101 using the magnetic inductive charging method, and may transmit power to an external electronic device using the magnetic resonance charging method. The charging area 210 of FIG. 2 may be one of an area (or space) in which the wireless charger 205 may transmit power using the magnetic resonance charging method, or an area (or space) in which the wireless charger 205 may transmit power using the magnetic inductive charging method. The charging area 210 may be an area within a predetermined distance from the wireless charger 205.

Most external electronic devices that may be connected to the electronic device 101 may be smaller than the electronic device 101 and may not include a separate display, so it may be often difficult to check remaining battery power of the external electronic devices. In order to check the remaining battery power of the external electronic devices that may be wirelessly connected to the electronic device 101, it may be necessary to connect the external electronic devices to the electronic device 101 and check each external electronic device individually, which may reduce usability.

According to an example embodiment, a method of providing a wireless charging guide and the electronic device 101 performing the same may improve convenience by providing battery charge state information for an external electronic device connected to the electronic device 101 and an external electronic device not connected to the electronic device 101 when the electronic device 101 is being wirelessly charged, and/or by providing a charging guide interface related to the charging of the external electronic device.

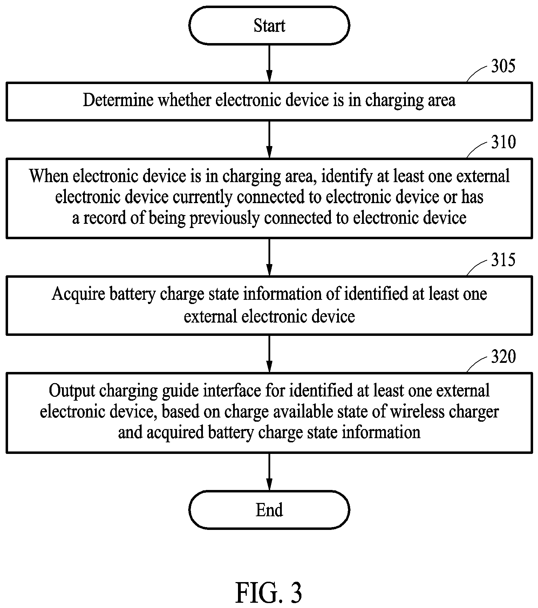

Hereinafter, the method of providing a wireless charging guide is described with reference to FIG. 3.

FIG. 3 is a flowchart illustrating a method of providing a wireless charging guide according to an example embodiment.

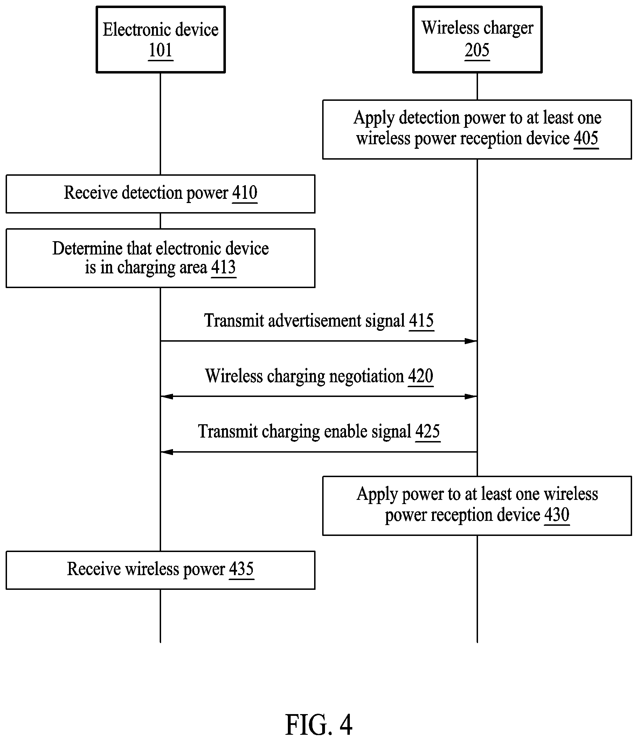

Referring to FIG. 3, in operation 305, the electronic device 101 may determine whether the electronic device 101 is in a charging area of the wireless charger 205. For example, when power transmitted from the wireless charger 205 is detected, the electronic device 101 may determine that the electronic device 101 is in the charging area of the wireless charger 205. When the electronic device 101 is in the charging area, the electronic device 101 may be wirelessly charged. Operation 305 will be further described with reference to FIG. 4 below.

When it is determined in operation 305 that the electronic device 101 is in the charging area of the wireless charger 205, in operation 310, the electronic device 101 may identify at least one external electronic device that is currently connected to the electronic device 101, or is currently not connected to the electronic device 101 and has a record of being previously connected to the electronic device 101.

For example, as illustrated in FIG. 2, the external electronic device (e.g., smartwatch) 215 may be currently connected to the electronic device 101, and the external electronic device (e.g., wireless earphones) 220 may not be currently connected to the electronic device 101. The electronic device 101 may identify the smartwatch 215 as an external electronic device currently connected to the electronic device 101, and may identify the wireless earphones 220 as an external electronic device that has a record of being previously connected to the electronic device 101.

In operation 315, the electronic device 101 may acquire battery charge state information of at least one external electronic device identified in operation 310. According to an example embodiment, the battery charge state information may include at least one of an icon indicating the identified at least one external electronic device, a name of the identified at least one external electronic device, identification information of the identified at least one external electronic device, remaining battery power of the identified at least one external electronic device, whether the identified at least one external electronic device is being charged, an estimated time to complete charging when the identified at least one external electronic device is being charged, a method (e.g., wired charging, magnetic inductive charging, or magnetic resonance charging) that may be used to charge the identified at least one external electronic device, an estimated available time of the identified at least one electronic device, a last time the identified at least one external electronic device was connected to the electronic device 101 when the identified at least one external electronic device was not connected to the electronic device 101, or remaining battery power of the corresponding last time.

For example, the electronic device 101 may receive battery charge state information of a corresponding external electronic device from at least one identified external electronic device connected to the electronic device 101.

When the identified at least one external electronic device is not currently connected to the electronic device 101 and is not being charged via the wireless charger 205, the electronic device 101 may call battery charge state information at the time the identified at least one external electronic device was last connected. For example, the time the identified at least one external electronic device was last connected, and the battery charge state information at the corresponding time may be stored in a memory (e.g., the memory 130 of FIG. 1) of the electronic device 101, and the electronic device 101 may call the battery charge state information of the last connected time stored in the memory. The electronic device 101 may estimate a current remaining battery power and a current available remaining time of the identified at least one external electronic device, based on remaining battery power of the last connected time and an available remaining time of the last connected time of the identified at least one external electronic device.

When the identified at least one external electronic device is currently being charged via the wireless charger 205, the electronic device 101 may receive the battery charge state information of the corresponding external electronic device from the wireless charger 205.

In operation 320, the electronic device 101 may output a charging guide interface for the identified at least one external electronic device, based on a charge available state of the wireless charger 205 and the battery charge state information acquired in operation 315.

The charge available state of the wireless charger 205 may include at least one of a state of an amount of power that may be provided by the wireless charger 205 or a remaining charging area of the wireless charger 205. For example, the charge available state may include a state of a remaining amount of power after excluding an amount of power provided to the electronic device 101 and the at least one external electronic device currently being charged from the amount of power that may be provided by the wireless charger 205. For example, when the wireless charger 205 supports magnetic inductive charging, the charge available state may include a state of a remaining charging area, excluding charging areas occupied by the electronic device 101 and the at least one external electronic device from charging areas for magnetic inductive charging included by the wireless charger 205.

In an example embodiment, the electronic device 101 may determine whether the identified at least one external electronic device may be charged and whether charging of the identified at least one external electronic device is required and/or appropriate, based on the battery charge state information acquired in operation 315.

In an example embodiment, whether charging of the identified at least one external electronic device is required and/or appropriate may be determined according to whether a current remaining battery power is less than or equal to a predetermined value, based on the battery charge state information of the identified at least one external electronic device. For example, when the current battery power of the identified at least one external electronic device is less than or equal to the predetermined value, it may be determined that charging of the identified at least one external electronic device is required and/or appropriate. The electronic device 101 may determine that charging is possible when the remaining battery power of the identified at least one external electronic device is equal to or greater than the predetermined value.

The electronic device 101 may output a charging guide interface for the identified at least one external electronic device, based on a charge available state of the wireless charger 205 and the battery charge state information acquired in operation 315.

The charging guide interface may be output on a screen of the electronic device 101 to be viewed by a user of the electronic device 101. The charging guide interface may include information on at least one of an icon indicating the identified at least one external electronic device, a name of the identified at least one external electronic device, identification information of the identified at least one external electronic device, remaining battery power of the identified at least one external electronic device, whether the identified at least one external electronic device may be charged, whether charging of the identified at least one external electronic device is required and/or appropriate may be determined based on the remaining battery power, a charging method (e.g., wired charging, magnetic inductive charging, or magnetic resonance charging) that may be used to charge the identified at least one external electronic device, whether the identified at least one external electronic device is being charged, a charge status of the identified at least one external electronic device that is being charged, an estimated time required to complete charging of the identified at least one external electronic device that is being charged, an estimated available time of the identified at least one external electronic device, the time the identified at least one external electronic device was last connected to the electronic device 101, remaining battery power at the corresponding last connected time, or a charge available state of the wireless charger 205.

For example, when the identified at least one external electronic device is connected to the electronic device 101 and is not being charged, the charging guide interface may include an icon indicating the identified at least one external electronic device, a name of the identified at least one external electronic device, identification information of the identified at least one external electronic device, remaining battery power of the identified at least one external electronic device, a charging method that may be used to charge the identified at least one external electronic device, and a remaining available time of the identified at least one electronic device.

For example, when the identified at least one external electronic device is not connected to the electronic device 101 and is not being charged, the charging guide interface may include an icon indicating the identified at least one external electronic device, a name of the identified at least one external electronic device, identification information of the identified at least one external electronic device, the time the identified at least one external electronic device was last connected to the electronic device 101, remaining battery power of the identified at least one external electronic device at the last connected time, a charging method that may be used to charge the identified at least one external electronic device, and an estimated remaining available time of the identified at least one electronic device.

For example, when the identified at least one external electronic device is being charged, the charging guide interface may include an icon indicating the identified at least one external electronic device, a name of the identified at least one external electronic device, identification information of the identified at least one external electronic device, a charge status of the identified at least one external electronic device, remaining battery power of the identified at least one external electronic device, and an estimated time required to complete charging of the identified at least one external electronic device.

The charging guide interface may guide a user to charge an identified at least one external electronic device that requires charging using the wireless charger 205. For example, when it is determined that charging of an identified at least one external electronic device is required, and it is possible to charge another identified at least one external electronic device using the wireless charger 205 according to a charge available state of the wireless charger 205, the electronic device 101 may output the charging guide interface including charging guide information for guiding the user to charge the identified at least one external electronic device that requires charging. The number and types of external electronic devices that the user is guided to charge to be included in the charging guide interface may vary according to the charge available state of the wireless charger 205.

When there are two or more external electronic devices identified in operation 310, the electronic device 101 may output a charging guide interface for two or more identified external electronic devices. In an example embodiment, the electronic device 101 may update the charging guide interface by receiving, in real time, battery charge state information of a corresponding external electronic device from at least one external electronic device that is identified and connected to the electronic device 101. The electronic device 101 may update the charging guide interface by receiving, in real time, battery charge state information of at least one external electronic device that is identified and is being charged using the wireless charger 205.

By providing the charging guide interface for an identified external electronic device not connected to the electronic device 101 to the user using a previously connected record of the identified external electronic device and information received via the wireless charger 205, in addition to an identified external electronic device connected to the electronic device 101, the user may easily check the battery charge state information, whether charging is available, and whether charging is required, without having to connect the identified external electronic device to the electronic device 101.

FIG. 4 is a diagram illustrating an example method of determining whether an electronic device is in a charging area of a wireless charger, according to an example embodiment.

Referring to FIG. 4, a process in which the electronic device 101 receives power by communicating with the wireless charger 205 using a magnetic resonance charging method is illustrated. In an example embodiment, the electronic device 101 may include a power receiver that receives power through the magnetic resonance charging method, and the wireless charger 205 may include a power transmitter that transmits power through the magnetic resonance charging method and/or a magnetic inductive charging method by magnetic coupling. The wireless charger 205 may include a transceiver that communicates with an electronic device and an external electronic device.

In operation 405, the wireless charger 205 may apply detection power (or a power beacon signal) to at least one wireless power reception device (e.g., the electronic device 101 or an external electronic device). When the electronic device 101 is in a charging area of the wireless charger 205, the electronic device 101 may receive the detection power in operation 410.

Upon receiving the detection power, the power receiver of the electronic device 101 may wake up, and in operation 413, the electronic device 101 may determine that the electronic device 101 is in the charging area.

For example, the electronic device 101 and the wireless charger 205 may perform wireless charging negotiation based on Bluetooth low energy (BLE) communication via the transceiver. When the electronic device 101 receives the detection power, in operation 415, the electronic device 101 may transmit a power receiving unit (PRU) advertisement signal based on BLE communication to the wireless charger 205. Based on the advertisement signal, in operation 420, the electronic device 101 and the wireless charger 205 may perform negotiation for wireless charging. For example, the electronic device 101 and the wireless charger 205 may share identification information of the electronic device 101, and determine information related to initiating wireless charging. The information related to initiating wireless charging may include, for example, information indicating that the electronic device 101 may be wirelessly charged and/or information on the magnitude of a voltage applied to an output terminal of a rectifier of the electronic device 101.

In operation 425, the wireless charger 205 may transmit a charging enable signal to the electronic device 101 when the wireless charging negotiation is completed. After the charging enable signal is transmitted, the wireless charger 205 may apply power to at least one wireless power reception device (e.g., the electronic device 101 or an external electronic device) in operation 430. After the charging enable signal is received, the electronic device 101 may receive power from the wireless charger 205 in operation 435.

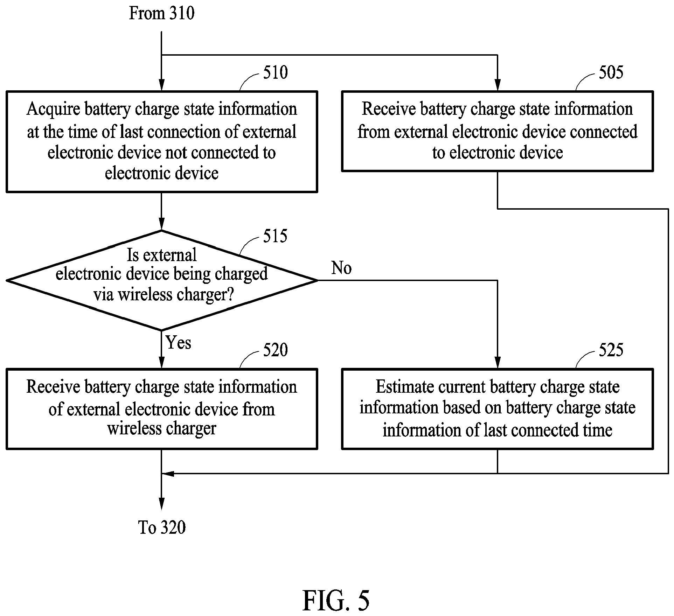

Hereinafter, an operation 315 of acquiring the battery charge state information of FIG. 3 is described with reference to FIG. 5.

FIG. 5 is a diagram illustrating an example method in which an electronic device acquires battery charge state information of an external electronic device, according to an example embodiment.

In operation 310 of FIG. 3, the electronic device 101 may identify at least one external electronic device that is currently connected, directly or indirectly, to the electronic device 101 or has a record of being previously connected, directly or indirectly, to the electronic device 101.

In operation 505 of FIG. 5, the electronic device 101 may receive, battery charge state information of an identified external electronic device that is connected to the electronic device 101 among the at least one external electronic device identified in operation 310, directly from the corresponding identified external electronic device.

In operation 510, the electronic device 101 may acquire battery charge state information at the time of a last connection of an external electronic device that is not currently connected, directly or indirectly, to the electronic device 101 among the at least one external electronic device identified in operation 310. For example, the last connected time of the identified at least one external electronic device and the battery charge state information at the corresponding time may be stored in a memory (e.g., the memory 130 of FIG. 1) of the electronic device 101, and the electronic device 101 may acquire the battery charge state information of the last connected time stored in the memory.

In operation 515, the electronic device 101 may determine whether the identified at least one external electronic device is being charged via the wireless charger 205. When the identified at least one external electronic device is being charged, in operation 520, the electronic device 101 may receive battery charge state information of the identified at least one external electronic device from the wireless charger 205.

When the identified at least one external electronic device is not being charged, in operation 525, the electronic device 101 may estimate current battery charge state information based on the battery charge state information of the last connected time. The electronic device 101 may estimate the current battery charge state information based on the last connected time and the current time. For example, the electronic device 101 may estimate a current estimated available time of the identified at least one external electronic device based on an estimated available time of the last connected time.

The electronic device 101 may output a charging guide interface as illustrated in operation 320 of FIG. 3, based on the battery charge state information acquired through operations 505, 520, and 525.

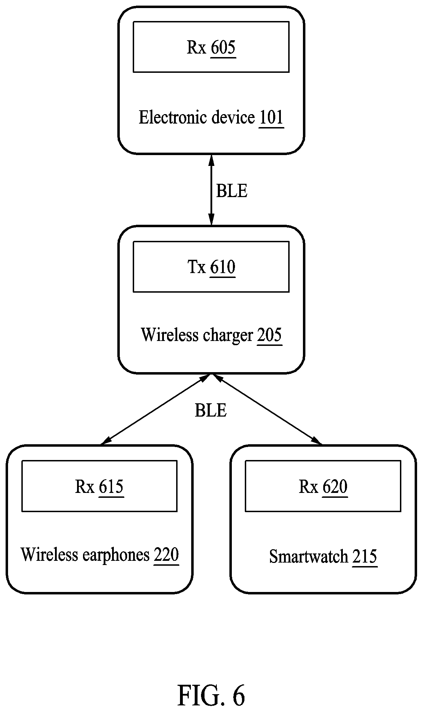

Hereinafter, an example in which an electronic device receives battery charge state information of an external electronic device being charged by a wireless charger without being connected to the electronic device is described with reference to FIG. 6.

FIG. 6 is a diagram illustrating an example in which an electronic device acquires battery charge state information of an electronic device being charged via a wireless charger, according to an example embodiment.

Referring to FIG. 6, the wireless charger 205 transmitting power and the electronic device 101 receiving power transmitted from the wireless charger 205 are illustrated. The wireless earphones 220 and the smartwatch 215 are further illustrated as examples of external electronic devices receiving power from the wireless charger 205. The wireless charger 205 may include a power transmitter 610, and the electronic device 101 receiving power transmitted from the power transmitter 610 of the wireless charger 205 may include a power receiver 605. External electronic devices receiving power transmitted from the power transmitter 610 of the wireless charger 205 may include a power receiver. For example, the wireless earphones 220 may include a power receiver 615, and the smartwatch 215 may include a power receiver 620.

As illustrated in FIG. 6, the electronic device 101 and the external electronic devices may not be connected, directly or indirectly, to each other. When the external electronic devices are being charged using the wireless charger 205, the electronic device 101 may receive battery charge state information of the external electronic devices that are not connected to the electronic device 101 via the wireless charger 205. In an example embodiment, the battery charge state information may further include information on a battery voltage of the corresponding external electronic device.

Communication between the wireless charger 205 and the electronic device 101 and communication between the wireless charger 205 and the external electronic devices may be performed using BLE communication. However, this is only an example, and various communication methods may be used.

For example, the electronic device 101 may identify at least one external electronic device having a record of being previously connected, directly or indirectly, to the electronic device 101, and transmit identification information on the identified at least one external electronic device to the wireless charger 205 to check whether the identified at least one external electronic device is being charged. The wireless charger 205 may check whether the identified at least one external electronic device is being charged based on the identification information of the at least one external electronic device received from the electronic device 101. The wireless charger 205 may communicate with the identified at least one external electronic device and receive battery charge state information of the identified at least one external electronic device to check whether the identified at least one external electronic device is being charged. The wireless charger 205 may transmit the battery charge state information of the identified at least one external electronic device to the electronic device 101, based on the identification information received from the identified at least one external electronic device. For example, the wireless charger 205 may transmit the identification information of the identified at least one external electronic device and the information on the battery voltage of the identified at least one external electronic device to the electronic device 101.

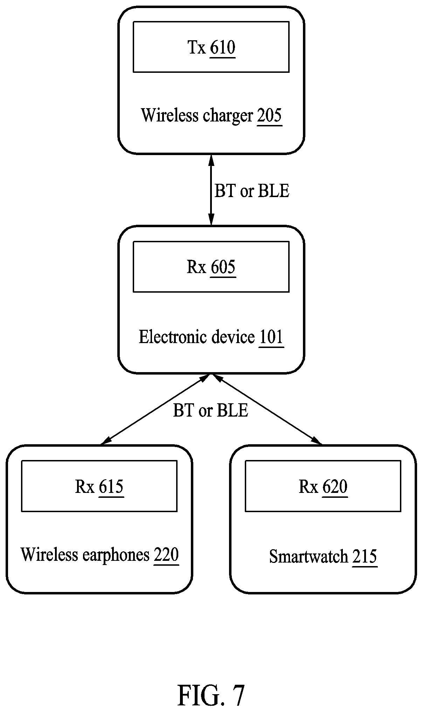

FIG. 7 is a diagram illustrating an example in which an electronic device acquires battery charge state information by communicating with an external electronic device, according to an example embodiment.

Referring to FIG. 7, the wireless charger 205 transmitting power and the electronic device 101 receiving power transmitted from the wireless charger 205 are illustrated, as illustrated in FIG. 6. The wireless earphones 220 and the smartwatch 215 are further illustrated as examples of external electronic devices receiving power from the wireless charger 205. The wireless charger 205 may include the power transmitter 610, and the electronic device 101 receiving power transmitted from the power transmitter 610 of the wireless charger 205 may include the power receiver 605. External electronic devices receiving power transmitted from the power transmitter 610 of the wireless charger 205 may include a power receiver. For example, the wireless earphones 220 may include the power receiver 615, and the smartwatch 215 may include the power receiver 620.

Unlike the example of FIG. 6, an electronic device may acquire battery charge state information of external electronic devices by communicating with the external electronic devices without going through a wireless charger. The external electronic devices may be identified through communication between the electronic device and the external electronic devices. For example, the electronic device may communicate with the wireless charger and external electronic devices through either Bluetooth communication or BLE communication.

The electronic device may communicate with the external electronic devices to receive information on whether charging is being performed and information on a battery voltage of the corresponding external electronic device.

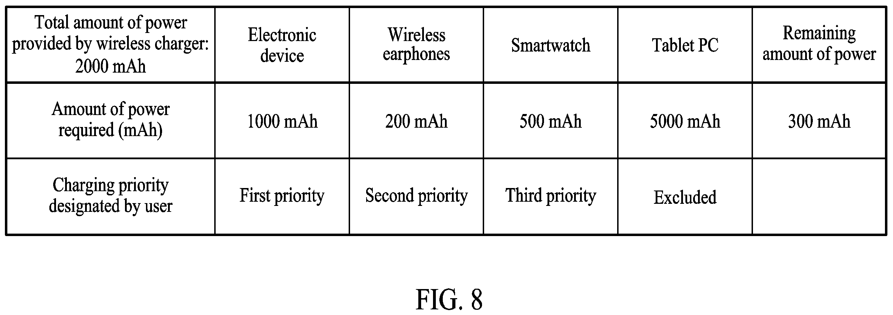

FIG. 8 is a diagram illustrating a charge available state related to an amount of charging power that may be provided by a wireless charger, according to an example embodiment.

Referring to FIG. 8, as an example of a charge available state of the wireless charger 205, a total amount of power that may be provided by the wireless charger 205, an amount of power required by the electronic device 101 and identified external electronic devices, a charging priority designated by a user, and a remaining amount of power are illustrated in the form of a table.

For example, the electronic device 101, as shown in FIG. 3 illustrating operation 320, may output a charging guide interface for an identified at least one external electronic device, based on the charge available state of the wireless charger 205 and acquired battery charge state information of the identified at least one external electronic device.

In an example embodiment, the charging guide interface may guide the user to charge an external electronic device that requires charging using the wireless charger 205. For example, when it is possible to charge an external electronic device in addition to the external electronic device currently being charged by using the wireless charger 205 according to the charge available state of the wireless charger 205, the electronic device 101 may output the charging guide interface including charging guide information that guides the user to charge the corresponding external electronic device. The number and type of external electronic devices that the user is guided to charge to be included in the charging guide interface may vary according to the charge available state of the wireless charger 205.

In an example embodiment, the charge available state may include a state of a remaining amount of power after excluding an amount of power provided to the electronic device 101 and the external electronic device currently being charged from the amount of power that may be provided by the wireless charger 205.

For example, in FIG. 8, the total amount of power that may be provided by the wireless charger 205 may be 2000 mAh. When the electronic device 101, wireless earphones, and a smartwatch are currently being charged using the wireless charger 205, the charge available state may include information on the remaining amount of power of 300 mAh. The electronic device 101 may output a charging guide interface for guiding the user to additionally charge another external electronic device based on the remaining amount of power.

In an example embodiment, a charging priority may be set between the electronic device 101 and the external electronic devices receiving power from the wireless charger 205. The charging priority may be changed by the user. The electronic device 101 may output a charging guide interface that guides charging of an external electronic device having a higher priority among external electronic devices that may be charged within the remaining amount of power.

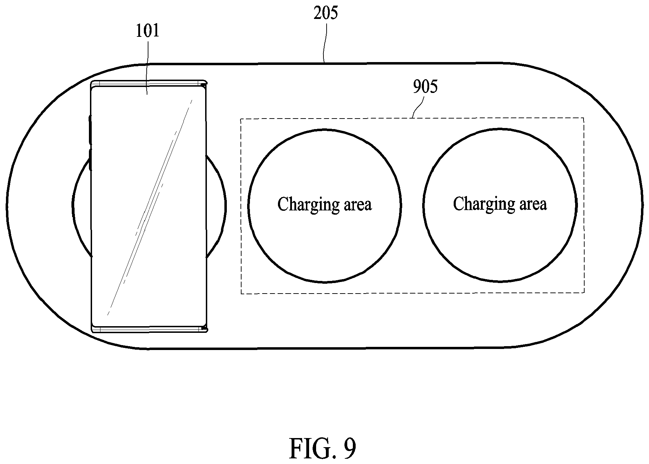

FIG. 9 is a diagram illustrating a charge available state related to a remaining charging area of a wireless charger that supports magnetic inductive charging according to an example embodiment.

Referring to FIG. 9, the wireless charger 205 transmitting power using a magnetic inductive charging method is illustrated. In the example of FIG. 9, the wireless charger 205 may include three charging areas.

The electronic device 101, as shown in FIG. 3 illustrating operation 320,, may output a charging guide interface for an identified at least one external electronic device, based on the charge available state of the wireless charger 205 and acquired battery charge state information of the identified at least one external electronic device.

The charging guide interface may guide a user to charge an external electronic device that requires charging using the wireless charger 205. For example, when it is possible to charge an external electronic device in addition to the external electronic device currently being charged by using the wireless charger 205 according to the charge available state of the wireless charger 205, the electronic device 101 may output the charging guide interface including charging guide information guiding the user to charge the corresponding external electronic device. The number and type of external electronic devices that the user is guided to charge to be included in the charging guide interface may vary according to the charge available state of the wireless charger 205.

When the wireless charger 205 supports magnetic inductive charging, the charge available state may include a state of a remaining charging area 905 after excluding charging areas occupied by the electronic device 101 and at least one external electronic device from charging areas for magnetic inductive charging included in the wireless charger 205.

For example, the electronic device 101 may be charged by the wireless charger 205 in any one of the three charging areas. In this case, the charge available state of the wireless charger 205 may include information on the two remaining charging areas 905 excluding one charging area in which the electronic device 101 is being charged. The electronic device 101 may output a charging guide interface for guiding the user to additionally charge two or less other external electronic devices based on the remaining charging areas 905.

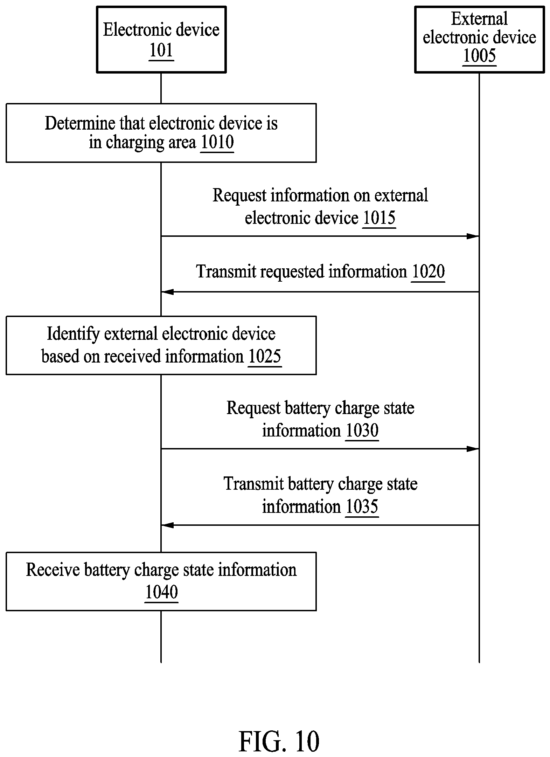

FIG. 10 is a diagram illustrating an operation in which an electronic device receives battery charge state information from an external electronic device connected to the electronic device, according to an example embodiment.

Referring to FIG. 10, a process in which an electronic device communicates with an external electronic device connected, directly or indirectly, to the electronic device to acquire battery charge state information is illustrated.

In operation 1010, the electronic device 101 may determine that the electronic device 101 is in a charging area of a wireless charger. For example, operation 1010 may correspond to operation 305 of FIG. 3.

In operation 1015, the electronic device 101 may request information on a corresponding external electronic device 1005 from the external electronic device 1005 connected to the electronic device 101. For example, information on the external electronic device 1005 may include an icon of the corresponding external electronic device 1005, a name of the corresponding external electronic device 1005, identification information of the corresponding external electronic device 1005, and remaining battery power of the corresponding external electronic device 1005.

In operation 1020, the external electronic device 1005 may transmit information on the corresponding external electronic device 1005 to the electronic device 101 in response to the request received from the electronic device 101.

In operation 1025, the electronic device 101 may identify the corresponding external electronic device 1005 based on information received from the external electronic device 1005. For example, operation 1025 may correspond to operation 310 of FIG. 3.

In operation 1030, the electronic device 101 may request battery charge state information of the corresponding external electronic device 1005 from the external electronic device 1005.

In operation 1035, the external electronic device 1005 may transmit the battery charge state information of the corresponding external electronic device 1005 to the electronic device 101 in response to the request of the electronic device 101. In an example embodiment, the battery charge state information may include at least one of an icon of the corresponding external electronic device 1005, a name of the corresponding external electronic device 1005, identification information of the corresponding external electronic device 1005, whether the corresponding external electronic device 1005 is being charged, remaining battery power of the corresponding external electronic device 1005, a method (e.g., wired charging, magnetic inductive charging, or magnetic resonance charging) that may be used to charge the corresponding external electronic device 1005, or an estimated available time of the corresponding external electronic device 1005.

In operation 1040, the electronic device 101 may receive the battery charge state information of the corresponding external electronic device 1005.

For example, operations 1030, 1035, and 1040 may correspond to operation 505 of FIG. 5.

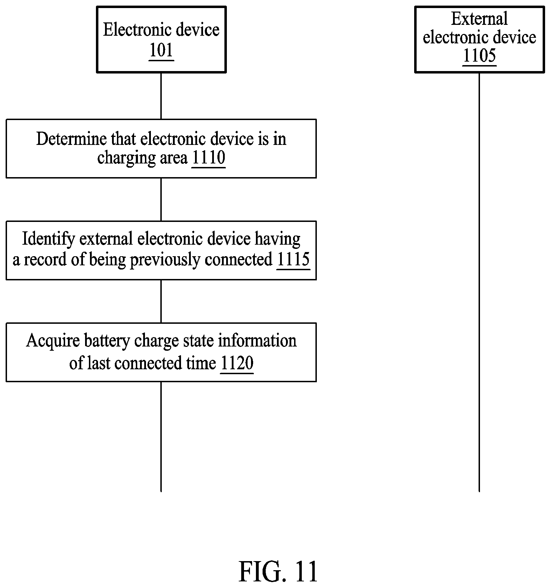

FIG. 11 is a diagram illustrating an operation in which an electronic device acquires battery charge state information of an external electronic device not connected to the electronic device, according to an example embodiment.

Referring to FIG. 11, a process in which the electronic device 101 acquires battery charge state information without communicating with an external electronic device 1105 that is not connected to the electronic device 101 is illustrated.

In operation 1110, the electronic device 101 may determine that the electronic device 101 is in a charging area of a wireless charger. For example, operation 1110 may correspond to operation 305 of FIG. 3.

In operation 1115, the electronic device 101 may identify the external electronic device 1105 having a record of being previously connected to the electronic device 101. For example, the electronic device 101 may call the record of the external electronic device 1105 being previously connected from a memory of the electronic device 101. For example, the record of previous connection may include an icon of the external electronic device 1105, a name of the external electronic device 1105, identification information of the external electronic device 1105, remaining battery power of the external electronic device 1105, and remaining battery power at a last connected time of the external electronic device 1105. The electronic device 101 may identify the corresponding external electronic device 1105 having a record of being previously connected, based on the called information.

For example, operation 1115 may correspond to operation 310 of FIG. 3.

In operation 1120, the electronic device 101 may acquire battery charge state information of a last connected time of the external electronic device 1105 identified in operation 1115. For example, the last connected time of the corresponding external electronic device 1105 and the battery charge state information at the corresponding time may be stored in a memory (e.g., the memory 130 of FIG. 1) of the electronic device 101, and the electronic device 101 may acquire the battery charge state information of the last connected time stored in the memory.

In the example of FIG. 11, the external electronic device 1105 may not be being charged. When the external electronic device 1105 is not being charged, in operation 1120, the electronic device 101 may estimate current battery charge state information based on the battery charge state information of the last connected time. The electronic device 101 may estimate the current battery charge state information based on the last connected time and the current time.

For example, operation 1120 may correspond to operations 510, 515, and 525 of FIG. 5.

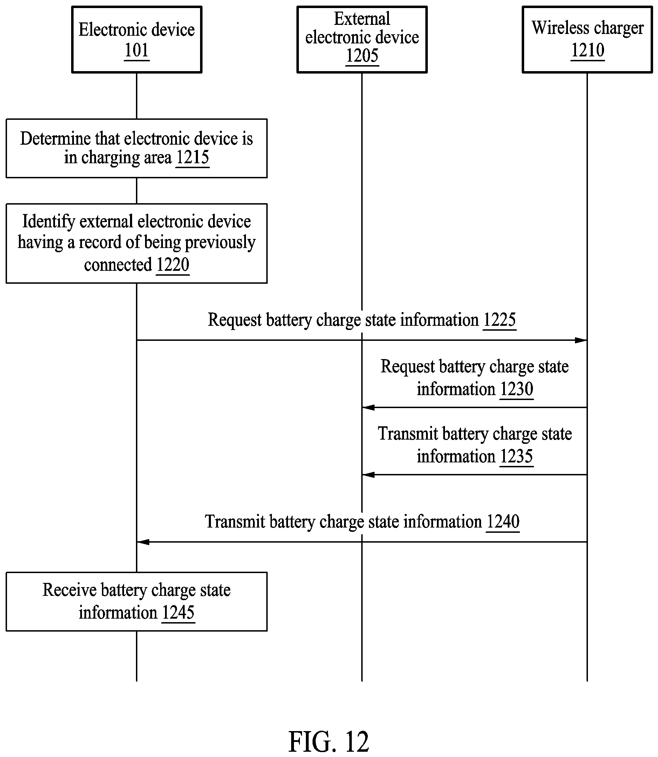

FIG. 12 is a diagram illustrating an operation in which an electronic device acquires battery charge state information of an external electronic device being charged via a wireless charger, according to an example embodiment.

Referring to FIG. 12, a process in which the electronic device 101 acquires battery charge state information of an external electronic device 1205 by communicating with a wireless charger 1210 when the external electronic device 1205 not connected to the electronic device 101 is being charged via the wireless charger 1210 is illustrated.

In operation 1215, the electronic device 101 may determine that the electronic device 101 is in a charging area of the wireless charger 1210. For example, operation 1215 may correspond to operation 305 of FIG. 3.

In operation 1220, the electronic device 101 may identify the external electronic device 1205 having a record of being previously connected to the electronic device 101. For example, the electronic device 101 may call the record of the external electronic device 1205 being previously connected from a memory of the electronic device 101. For example, the record of previous connection may include an icon of the external electronic device 1205, a name of the external electronic device 1205, identification information of the external electronic device 1205, remaining battery power of the external electronic device 1205, and remaining battery power at a last connected time of the external electronic device 1205. The electronic device 101 may identify the corresponding external electronic device 1205 having a record of being previously connected, based on the called information.

For example, operation 1220 may correspond to operation 310 of FIG. 3.

In operation 1225, the electronic device 101 may request battery charge state information of the corresponding external electronic device 1205 from the wireless charger 1210.

In operation 1230, the wireless charger 1210 may communicate with the external electronic device 1205 being charged to acquire the battery charge state information requested by the electronic device 101. The wireless charger 1210 may request battery charge state information from the external electronic device 1205.

In operation 1235, the external electronic device 1205 may transmit the battery charge state information of the external electronic device 1205 to the wireless charger 1210 in response to the request of the wireless charger 1210. In operation 1240, the wireless charger 1210 may receive the battery charge state information of the corresponding external electronic device 1205 from the external electronic device 1205, and transmit the corresponding battery charge state information to the electronic device 101. In operation 1245, the electronic device 101 may receive the battery state information of the external electronic device 1205 from the wireless charger 1210.

For example, operations 1235, 1240, and 1245 may correspond to operations 510, 515, and 520 of FIG. 5.

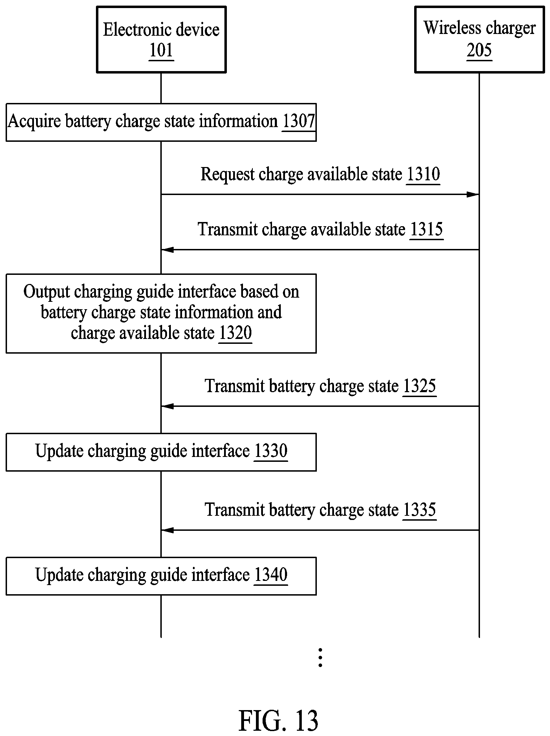

FIG. 13 is a diagram illustrating an operation in which an electronic device communicates with a wireless charger and outputs a charging guide interface, according to an example embodiment.

Referring to FIG. 13, a process in which the electronic device 101 communicates with the wireless charger 205 to receive a charge available state of the wireless charger 205, outputs a charging guide interface based on the charge available state, and updates the charging guide interface is illustrated.

In operation 1307, the electronic device 101 may acquire battery charge state information of an identified at least one external electronic device. For example, operation 1307 may correspond to operation 315 of FIG. 3, operation 1040 of FIG. 10, operation 1120 of FIG. 11, or operation 1245 of FIG. 12.

In operation 1310, the electronic device 101 may send a request to the wireless charger 205 to transmit a charge available state. The charge available state may include at least one of a state of an amount of power that may be provided by the wireless charger 205 or a state of a remaining charging area of the wireless charger 205. For example, the charge available state may include a state of a remaining amount of power after excluding an amount of power provided to the electronic device 101 and the at least one external electronic device currently being charged from the amount of power that may be provided by the wireless charger 205. For example, when the wireless charger 205 supports magnetic inductive charging, the charge available state may include a state of a remaining charging area after excluding charging areas occupied by the electronic device 101 and the at least one external electronic device from charging areas for magnetic inductive charging included in the wireless charger 205.

In operation 1315, the wireless charger 205 may transmit the charge available state of the wireless charger 205 to the electronic device 101. In operation 1320, the electronic device 101 may output a charging guide interface based on the acquired battery charge state information and the received charge available state.

For example, operations 1310, 1315, and 1320 may correspond to operation 320 of FIG. 3.

While an external electronic device is being charged via the wireless charger 205, as time passes, a battery charge state may change, for example, the remaining battery power of the external electronic device may increase, and accordingly, the wireless charger 205 may transmit the battery charge state to the electronic device 101 in real time. For example, the wireless charger 205 may periodically and repeatedly transmit the battery charge state to the electronic device 101. For example, when a change in the battery charge state is detected, the wireless charger 205 may transmit the battery charge state to the electronic device 101.

For example, in operations 1325 and 1335, the wireless charger 205 may transmit the battery charge state to the electronic device 101. The electronic device 101 may update the charging guide interface based on the received battery charge state in operations 1330 and 1340.

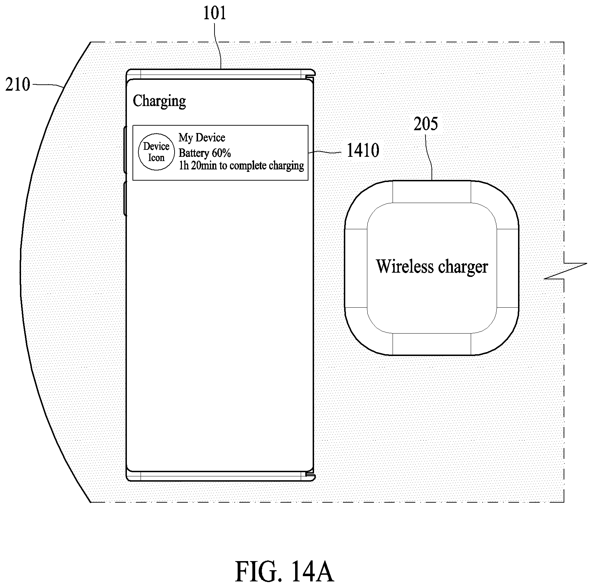

FIGS. 14A to 14D are diagrams illustrating a charging guide interface for an external electronic device connected to an electronic device according to an example embodiment.

Referring to FIG. 14A, the electronic device 101 receiving power from the wireless charger 205 within the charging area 210 of the wireless charger 205 using a magnetic resonance charging method and battery charge state information 1410 of the electronic device 101 output on a screen of the electronic device 101 are illustrated. In an example embodiment, when the electronic device 101 receives power from the wireless charger 205 and charging is started, the electronic device 101 may output the battery charge state information 1410 of the electronic device 101. For example, the battery charge state information 1410 of the electronic device 101 may include at least one of an icon of the electronic device 101, a name (e.g., My Device) of the electronic device 101, remaining battery power, or a time required to complete charging.

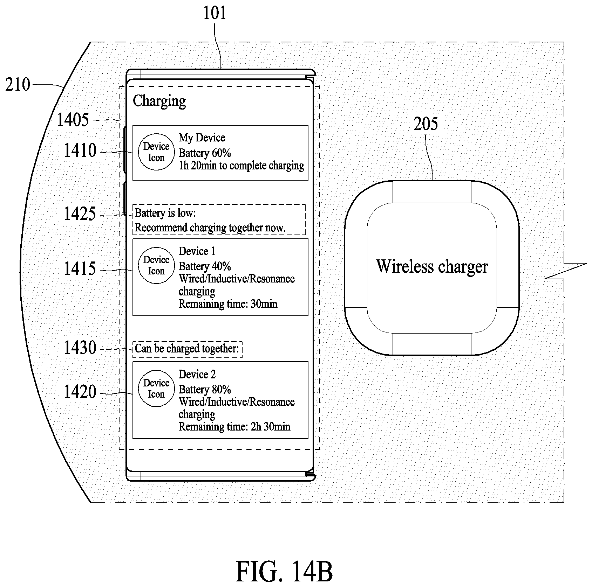

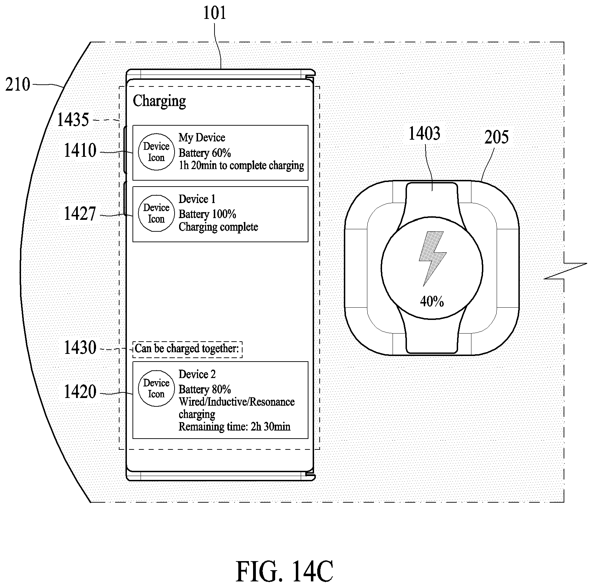

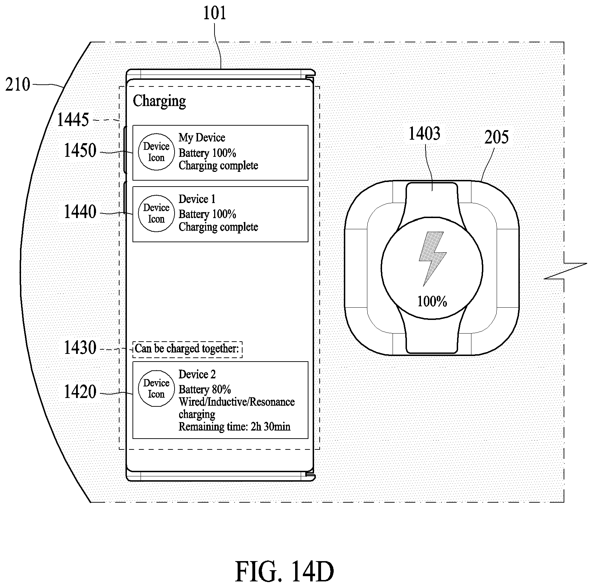

When charging is started, the electronic device 101 may identify at least one external electronic device that is currently connected to the electronic device 101 or has a record of being previously connected to the electronic device 101 as shown in FIG. 3 illustrating operation 310. In the example of FIG. 14, a first external electronic device 1403 and a second external electronic device currently connected to the electronic device 101 may be identified.

The electronic device 101 may receive battery charge state information 1415 and 1420 of each external electronic device from the identified first external electronic device 1403 and the second external electronic device. The electronic device 101 may determine whether charging of each external electronic device is required based on the received battery charge state information 1415 and 1420. For example, when remaining battery power of each external electronic device is less than or equal to a predetermined value based on the received battery charge state information 1415 and 1420, the electronic device 101 may determine that charging of the corresponding external electronic device is required. In the example of FIGs. 14A-14D, as an example, the remaining battery power of the first external electronic device 1403 may be 40%, the remaining battery power of the second external electronic device may be 80%, and the predetermined value set for the remaining battery power may be 50%. The electronic device 101 may determine that charging for the first external electronic device 1403 is required, and determine that charging is possible for the second external electronic device.

Based on a charge available state of the wireless charger 205, the electronic device 101 may determine that charging of both the first external electronic device 1403 and the second external electronic device is possible based on a remaining amount of power after excluding an amount of power provided to the electronic device 101 from among a total amount of power that may be provided by the wireless charger 205.

In FIG. 14B, the electronic device 101 may output a charging guide interface 1405 based on the battery charge state information 1415 and 1420 and the charge available state. For example, the charging guide interface 1405 may include the battery charge state information 1410 of the electronic device 101, the battery charge state information 1415 of the first external electronic device 1403, the battery charge state information 1420 of the second external electronic device, a charging guide 1425 for the first external electronic device 1403 determined to require charging, and a charging guide 1430 for the second external electronic device determined to be chargeable.

As illustrated in FIG. 14C, a user may view the charging guide interface 1405 and charge the first external electronic device 1403 requiring charging in the charging area 210. Alternatively, when the wireless charger 205 supports a magnetic inductive charging method, the user may charge the first external electronic device 1403 by using a magnetic inductive charging method in a charging area (not shown) for magnetic inductive charging of the wireless charger 205.

The electronic device 101 may receive the battery charge state information 1425 of the first external electronic device 1403 updated after charging of the first external electronic device 1403 by the wireless charger 205 is started from the first external electronic device 1403 or the wireless charger 205, and may update the charging guide interface 1405 based on the received battery charge state information 1425 of the first external electronic device 1403.

A charging guide interface 1435 that is updated may include the battery charge state information 1410 of the electronic device 101, battery charge state information 1427 of the first external electronic device 1403, the battery charge state information 1420 of the second external electronic device, and the charging guide 1430 for the second external electronic device determined to be chargeable.

As illustrated in FIG. 14D, charging of the first external electronic device 1403 may be completed. The electronic device 101 may receive battery charge state information 1440 of the first external electronic device 1403 updated after charging of the first external electronic device 1403 is completed from the first external electronic device 1403 or the wireless charger 205, and may update the charging guide interface 1435 based on the received battery charge state information 1440 of the first external electronic device 1403.

The charging guide interface 1445 that is updated may include battery charge state information 1450 of the electronic device 101, the battery charge state information 1440 of the first external electronic device 1403, the battery charge state information 1420 of the second external electronic device, and the charging guide 1430 for the second external electronic device determined to be chargeable.

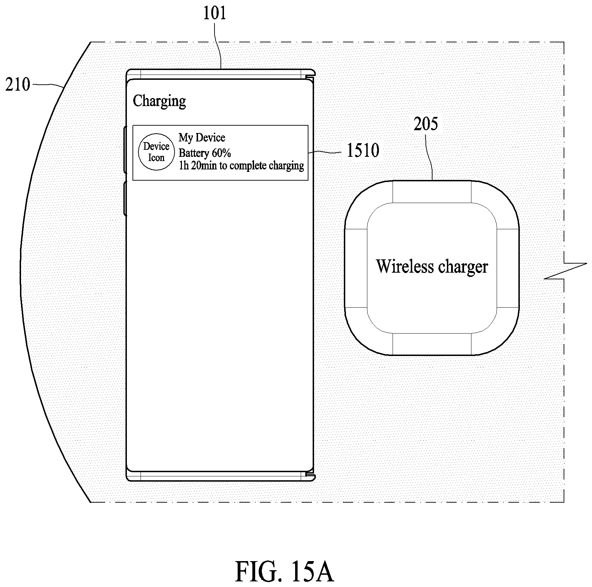

FIGS. 15A to 15D are diagrams illustrating a charging guide interface for an external electronic device not connected to the electronic device according to an example embodiment.

Referring to FIG. 15A, the electronic device 101 receiving power of the wireless charger 205 within the charging area 210 of the wireless charger 205 using a magnetic resonance charging method and battery charge state information 1510 of the electronic device 101 output on a screen of the electronic device 101 are illustrated. In an example embodiment, when the electronic device 101 receives power from the wireless charger 205 and charging is started, the electronic device 101 may output the battery charge state information 1510 of the electronic device 101. For example, the battery charge state information 1510 of the electronic device 101 may include at least one of an icon of the electronic device 101, a name (e.g., My Device) of the electronic device 101, remaining battery power, or a time required to complete charging.

When charging is started, the electronic device 101 may identify at least one external electronic device that is currently connected to the electronic device 101 or has a record of being previously connected to the electronic device 101 as illustrated in operation 310 of FIG. 3. In the example of FIGs. 15A-15D, for example, a first external electronic device and a second external electronic device 1503 that are not currently connected to the electronic device 101 may be identified.

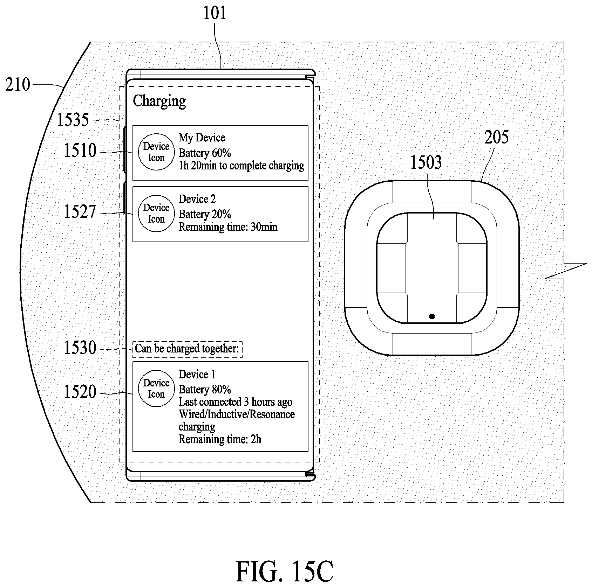

The electronic device 101 may estimate current battery state information based on battery charge state information of last connected times of the identified first external electronic device and the second external electronic device 1503. The electronic device 101 may determine whether charging of each external electronic device is required based on the estimated battery charge state information. For example, when remaining battery power of each external electronic device is less than or equal to a predetermined value based on the estimated battery charge state information, the electronic device 101 may determine that charging of the corresponding external electronic device is required. In the example of FIG. 15C for example, the remaining battery power of the second external electronic device may be 20%, the remaining battery power of the first external electronic device may be 80%, and the predetermined value set for the remaining battery power may be 50%. The electronic device 101 may determine that charging for the second external electronic device is required, and determine that charging is possible for the first external electronic device.

Based on a charge available state of the wireless charger 205, the electronic device 101 may determine that charging of both the first external electronic device and the second external electronic device 1503 is possible based on a remaining amount of power after excluding an amount of power provided to the electronic device 101 from among a total amount of power that may be provided by the wireless charger 205.

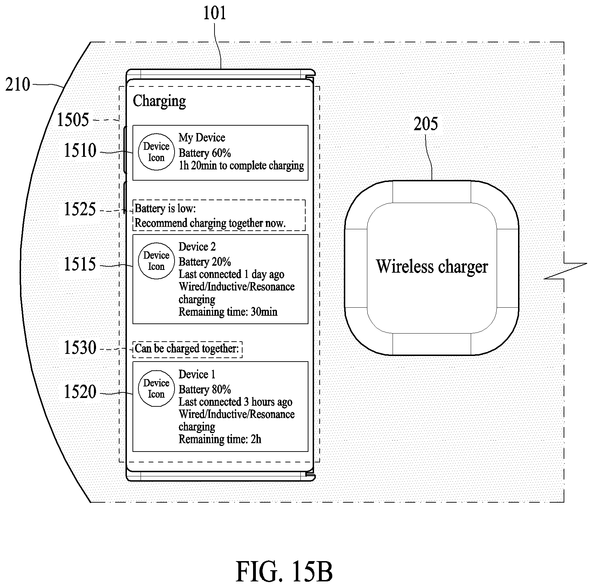

As illustrated in FIG. 15B, the electronic device 101 may output a charging guide interface 1505 based on estimated battery charge state information 1515 and 1520 and the charge available state. For example, the charging guide interface 1505 may include the battery charge state information 1510 of the electronic device 101, the battery charge state information 1515 of the first external electronic device, the battery charge state information 1520 of the second external electronic device 1503, a charging guide 1525 for the second external electronic device 1503 determined to require charging, and a charging guide 1530 for the first external electronic device determined to be chargeable.

As illustrated in FIG. 15C, a user may view the charging guide interface 1535 and charge the second external electronic device 1503 requiring charging in the charging area 210. Alternatively, when the wireless charger 205 supports a magnetic inductive charging method, the user may charge the second external electronic device 1503 by using a magnetic inductive charging method in a charging area (not shown) for magnetic inductive charging of the wireless charger 205.

The electronic device 101 may receive battery charge state information 1527 of the second external electronic device 1503 updated after charging of the second external electronic device 1503 by the wireless charger 205 is started from the wireless charger 205, and may update the charging guide interface 1535 based on the received battery charge state information 1527 of the second external electronic device 1503.

A charging guide interface 1535 that is updated may include the battery charge state information 1510 of the electronic device 101, the battery charge state information 1527 of the second external electronic device 1503, the battery charge state information 1520 of the first external electronic device, and the charging guide 1530 for the first external electronic device determined to be chargeable.

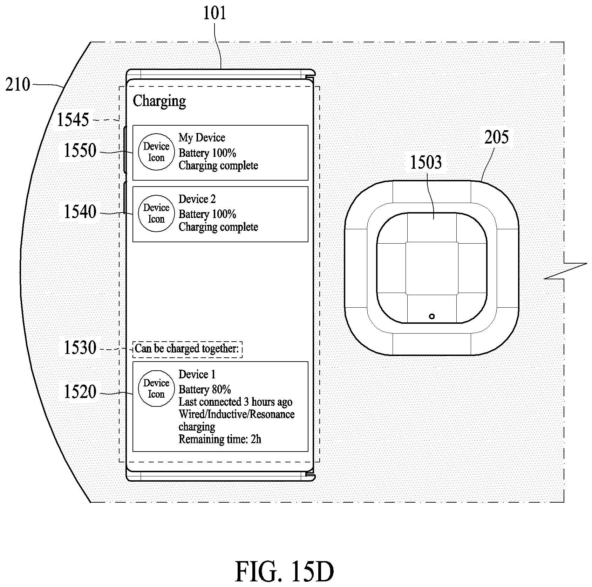

As illustrated in FIG. 15D, charging of the second external electronic device 1503 may be completed. The electronic device 101 may receive battery charge state information 1540 of the second external electronic device 1503 updated after charging of the second external electronic device 1503 is completed from the wireless charger 205, and may update the charging guide interface 1535 based on the received battery charge state information 1540 of the second external electronic device 1503.

A charging guide interface 1545 that is updated may include battery charge state information 1550 of the electronic device 101, the battery charge state information 1520 of the first external electronic device, the battery charge state information 1540 of the second external electronic device 1503, and the charging guide 1530 for the first external electronic device determined to be chargeable.

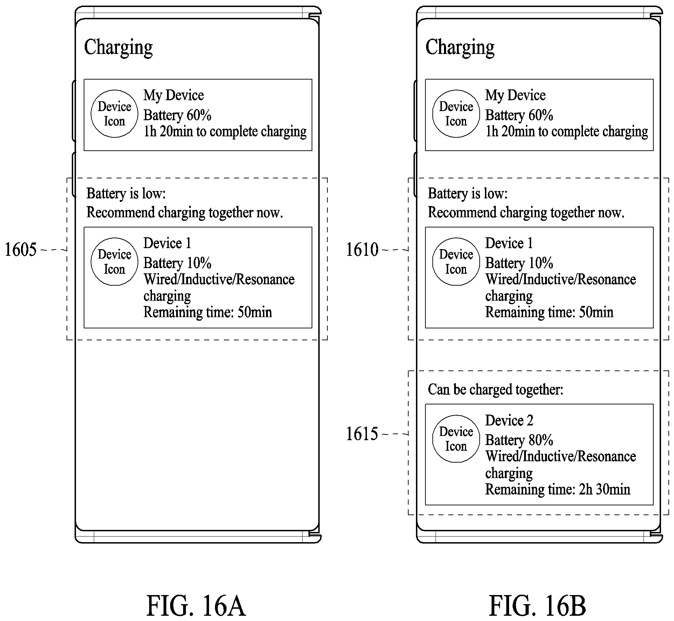

FIGS. 16A to 16C are diagrams illustrating a charging guide interface output from an electronic device according to a charge available state of a wireless charger according to an example embodiment.

In an example embodiment, the number of external electronic devices that a user is guided to charge based on a charging guide interface may be determined according to a charging state of a wireless charger.

In the example of FIGs. 16A-C,, for example, a first external electronic device that requires charging, a second external electronic device for which charging is possible, and a third external electronic device for which charging is possible may be identified.

In an example embodiment, when a remaining amount of power of a wireless charger is not sufficient to charge all identified devices, a priority of the first external electronic device determined to require charging based on a battery charge state may be higher than a priority of the second external electronic device and the third external electronic device that are determined to be chargeable. In the charging guide interface, charging guide information for an external electronic device having a higher priority may be preferentially displayed.

For example, in the example of FIG. 16A, a remaining amount of power excluding an amount of power supplied to an electronic device among an amount of power provided by the wireless charger may not be sufficient to charge all of the first external electronic device, the second external electronic device, and the third external electronic device, and the charging guide interface may include (e.g., only, or at least) a charging guide 1605 for the first external electronic device having the highest priority.

For example, in the example of FIG. 16B, the remaining amount of power excluding the amount of power supplied to the electronic device among the amount of power provided by the wireless charger may be an amount of power that may charge only two external electronic devices, and the charging guide interface may include only a charging guide 1610 for the first external electronic device having the highest priority and a charging guide 1615 for the second external electronic device having the next highest priority.

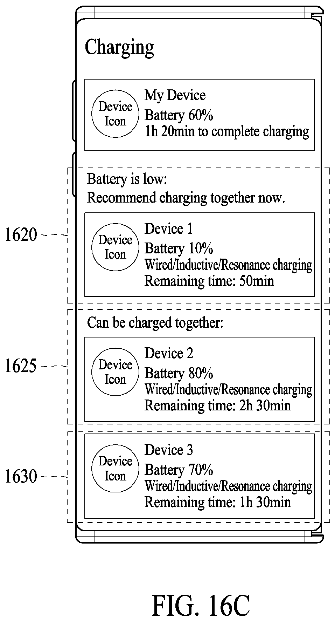

For example, in the example of FIG. 16C, the remaining amount of power excluding the amount of power supplied to the electronic device among the amount of power provided by the wireless charger may be sufficient to charge all of the first external electronic device, the second external electronic device, and the third external electronic device, and the charging guide interface may include charging guides 1620, 1625, and 1630 for the first external electronic device, the second external electronic device, and the third external electronic device.

According to an example embodiment, an electronic device 101 may include a processor 120, and a memory 130 configured to store instructions executable by the processor 120, wherein, when the instructions are executed by the processor 120, the processor 120 may be configured to determine whether the electronic device 101 is in a charging area of a wireless charger 205, when it is determined that the electronic device 101 is in the charging area, identify at least one external electronic device (e.g., the smartwatch 215 and the wireless earphones 220 of FIG. 2) that is currently connected, directly or indirectly, to the electronic device 101 or has a record of being previously connected, directly or indirectly, to the electronic device 101, acquire battery charge state information of the identified at least one external electronic device, and output a charging guide interface for the identified at least one external electronic device, based on a charge available state of the wireless charger 205 and the acquired battery charge state information. Each "processor" herein comprises processing circuitry.

The acquiring of the battery charge state information may include receiving battery charge state information of the identified at least one external electronic device from the identified at least one external electronic device, or estimating current battery charge state information of the identified at least one external electronic device based on battery charge state information of a last connected time of the identified at least one external electronic device.

The acquiring of the battery charge state information may include receiving battery charge state information of the identified at least one external electronic device from the wireless charger 205.

The receiving of the battery charge state information from the wireless charger 205 may be performed using BLE communication, and the battery charge state information may include at least one of an icon indicating the identified at least one external electronic device, a name of the identified at least one external electronic device, identification information of the identified at least one external electronic device, remaining battery power of the identified at least one external electronic device, whether the identified at least one external electronic device is being charged, an estimated time to complete charging when the identified at least one external electronic device is being charged, a charging method that may be used to charge the identified at least one external electronic device, an estimated available time of the identified at least one external electronic device, a last time the identified at least one external electronic device was connected to the electronic device 101, or remaining battery power of the corresponding last time.

The outputting of the charging guide may include determining whether charging of the identified at least one external electronic device is required, based on at least one of the received battery charge state information or the estimated current battery charge state information, and outputting the charging guide interface including information on the determination of whether the charging is required.

The determining of whether the charging is required may include determining that charging of the identified at least one external electronic device is required when remaining battery power included in the received battery charge state information or the estimated current battery charge state information is less than or equal to a predetermined value.

The charging guide interface may include at least one of an icon indicating the identified at least one external electronic device, a name of the identified at least one external electronic device, remaining battery power of the identified at least one external electronic device, whether the identified at least one external electronic device may be charged, whether charging of the identified at least one external electronic device is required determined based on the remaining battery power, whether the identified at least one external electronic device is being charged, an estimated available time of the identified at least one external electronic device, or information on the charge available state of the wireless charger 205, and the charge available state may include a state of at least one of an amount of power that may be provided by the wireless charger 205 or a remaining charging area of the wireless charger 205.

The outputting of the charging guide may include determining a number of external electronic devices that may be additionally charged, based on the charge available state of the wireless charger 205, and outputting the charging guide interface including information on the determined number of external electronic devices.

The wireless charger 205 may be configured to simultaneously charge a plurality of external electronic devices using one of a resonance charging method or an inductive charging method.

The determining of whether the electronic device is in the charging area may include determining the electronic device 101 to be in the charging area when power transmitted from the wireless charger 205 is detected.

According to an example embodiment, the wireless charger 205 may include a power transmitter configured to transmit power to the electronic device 101 and an external electronic device that may be connected to the electronic device 101 using one of a resonance charging method or an inductive charging method, a transceiver configured to communicate with the electronic device 101 and the external electronic device, and a controller configured to control the power transmitter and the transceiver, wherein the controller may be configured to receive a first request signal requesting transmission of battery charge state information of the external electronic device being charged by the wireless charger 205 from the electronic device 101, transmit a second request signal requesting transmission of battery charge state information of the external electronic device to the external electronic device in response to the first request signal, receive the battery charge state information of the external electronic device from the external electronic device in response to the second request signal, and transmit the received battery charge state information to the electronic device 101.

The controller, comprising processing circuitry, may control to transmit a charge available state of the wireless charger 205 to the electronic device 101.

The battery charge state information of the external electronic device may include at least one of identification information of the external electronic device or a battery voltage of the external electronic device, and the charge available state may include a state of at least one of an amount of power that may be provided by the wireless charger 205 or a remaining charging area of the wireless charger 205.

According to an example embodiment, a method of providing a wireless charging guide may include determining whether the electronic device 101 is in a charging area of the wireless charger 205, when it is determined that the electronic device 101 is in the charging area, identifying at least one external electronic device that is currently connected, directly or indirectly, to the electronic device 101 or has a record of being previously connected, directly or indirectly, to the electronic device 101, acquiring battery charge state information of the identified at least one external electronic device, and
outputting a charging guide interface for the identified at least one external electronic device, based on a charge available state of the wireless charger 205 and the acquired battery charge state information.

The acquiring of the battery charge state information may include receiving battery charge state information of the identified at least one external electronic device from the identified at least one external electronic device, or estimating current battery charge state information of the identified at least one external electronic device based on battery charge state information of a last connected time of the identified at least one external electronic device.

The acquiring of the battery charge state information may include receiving battery charge state information of the identified at least one external electronic device from the wireless charger 205.

The receiving of the battery charge state information from the wireless charger 205 may be performed using BLE communication, and the battery charge state information may include at least one of an icon indicating the identified at least one external electronic device, a name of the identified at least one external electronic device, identification information of the identified at least one external electronic device, remaining battery power of the identified at least one external electronic device, whether the identified at least one external electronic device is being charged, an estimated time to complete charging when the identified at least one external electronic device is being charged, a charging method that may be used to charge the identified at least one external electronic device, an estimated available time of the identified at least one external electronic device, a last time the identified at least one external electronic device was connected, directly or indirectly, to the electronic device 101, or remaining battery power of the corresponding last time.

The outputting of the charging guide may include determining whether charging of the identified at least one external electronic device is required, based on at least one of the received battery charge state information or the estimated current battery charge state information, and outputting the charging guide interface including information on the determination of whether the charging is required.

The determining of whether the charging is required may include determining that charging of the identified at least one external electronic device is required when remaining battery power included in the received battery charge state information or the estimated current battery charge state information is less than or equal to a predetermined value.

The electronic device according to certain example embodiments may be one of various types of electronic devices. The electronic device may include, for example, a portable communication device (e.g., a smartphone), a computer device, a portable multimedia device, a portable medical device, a camera, a wearable device, or a home appliance device. According to an example embodiment of the disclosure, the electronic device is not limited to those described above.

It should be understood that Certain example embodiments and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the items, unless the relevant context clearly indicates otherwise. As used herein, "A or B", "at least one of A and B", "at least one of A or B", "A, B or C", "at least one of A, B and C", and "at least one of A, B, or C," each of which may include any one of the items listed together in the corresponding one of the phrases, or all possible combinations thereof. Terms such as "1^{st}," "2^{nd}," or "first" or "second" may simply be used to distinguish the component from other components in question, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via at least a third element.

As used in connection with Certain example embodiments, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an example embodiment, the module may be implemented in a form of an application-specific integrated circuit (ASIC). Thus, each "module" herein may comprise circuitry.

Embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an example embodiment, a method according to Certain example embodiments may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

Each embodiment herein may be used in combination with any other embodiment(s) described herein.

"Based on" as use herein covers based at least on.

According to certain example embodiments, each component (e.g., a module or a program) of the above-described components may include a single entity or multiple entities, and some of the multiple entities may be separately disposed in different components. According to certain example embodiments, one or more of the above-described components may be omitted, or one or more other components may be added. Alternatively or additionally, a plurality of components (e.g., modules or programs) may be integrated into a single component. In such a case, according to certain example embodiments, the integrated component may still perform one or more functions of each of the plurality of components in the same manner or in a similar manner as they are performed by a corresponding one of the plurality of components before the integration. According to certain example embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various embodiments, it will be understood that the various embodiments are intended to be illustrative, not limiting. It will further be understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. An electronic device (101), comprising:
a processor (120); and
a memory (130) configured to store instructions executable by the processor (120),
wherein the processor (120) is configured to:
determine whether the electronic device(101) is in a charging area of a wireless charger(205);
based on a determination that the electronic device (101) is in the charging area, identify at least one external electronic device that is currently connected to the electronic device (101) and/or has a record of being previously connected to the electronic device (101);
acquire battery charge state information of the identified at least one external electronic device; and
control to output a charging guide interface for the identified at least one external electronic device, based on a charge available state of the wireless charger (205) and the acquired battery charge state information.

2. The electronic device (101) of claim 1, wherein the acquire the battery charge state information comprises:
receive battery charge state information of the identified at least one external electronic device from the identified at least one external electronic device, and/or estimating current battery charge state information of the identified at least one external electronic device based on battery charge state information of a last connected time of the identified at least one external electronic device.

3. The electronic device (101) of claim 1 or 2, wherein the acquire the battery charge state information comprises receive battery charge state information of the identified at least one external electronic device from the wireless charger (205).

4. The electronic device (101) of claim 3, wherein the receive of the battery charge state information from the wireless charger (205) is to be via Bluetooth low energy (BLE) communication, and
the battery charge state information comprises at least one of:
an icon indicating the identified at least one external electronic device, a name of the identified at least one external electronic device, identification information of the identified at least one external electronic device, remaining battery power of the identified at least one external electronic device, whether the identified at least one external electronic device is being charged, an estimated time to complete charging in response to the identified at least one external electronic device being charged, a charging method that may be used to charge the identified at least one external electronic device, an estimated available time of the identified at least one external electronic device, a last time the identified at least one external electronic device was connected to the electronic device (101), or remaining battery power of the corresponding last time.

5. The electronic device (101) of any one claims 2 to 4, wherein processor is configured so that the output of the charging guide comprises:
the processor (120) is configured to determine whether charging of the identified at least one external electronic device is required and/or appropriate, based on at least one of the received battery charge state information or the estimated current battery charge state information; and
output the charging guide interface comprising information on the determination of whether the charging is required and/or appropriate.

6. The electronic device (101) of claim 5, wherein the processor (120) is configured so that the determine whether the charging is required and/or appropriate comprises:
the processor (120) is configured to determine that charging of the identified at least one external electronic device is required and/or appropriate in response to remaining battery power comprised in the received battery charge state information and/or the estimated current battery charge state information being less than or equal to a predetermined value.

7. The electronic device (101) of claim 5 or 6, wherein the charging guide interface comprises at least one of:
an icon indicating the identified at least one external electronic device, a name of the identified at least one external electronic device, remaining battery power of the identified at least one external electronic device, whether the identified at least one external electronic device may be charged, whether charging of the identified at least one external electronic device is required determined based on the remaining battery power, whether the identified at least one external electronic device is being charged, an estimated available time of the identified at least one external electronic device, or information on the charge available state of the wireless charger (205),
and the charge available state comprises a state of at least one of an amount of power that may be provided by the wireless charger (205) or a remaining charging area of the wireless charger (205).

8. The electronic device (101) of any one claims 1 to 7, wherein the output of the charging guide comprises:
the processor (120) configured to determine a number of external electronic devices that may be additionally charged, based on the charge available state of the wireless charger (205); and
the processor (120) configured to control to output the charging guide interface comprising information on the determined number of external electronic devices.

9. The electronic device (101) of any one claims 1 to 8, wherein the wireless charger (205) is configured to simultaneously charge a plurality of electronic devices using one of a resonance charging technique or an inductive charging technique.

10. The electronic device of (101) any one of claims 1 to 9, wherein the determine of whether the electronic device (101) is in the charging area comprises:
the processor (120) is configured to determine the electronic device (101) to be in the charging area based on power transmitted from the wireless charger (205) being detected.

11. A wireless charger (205), comprising:
a power transmitter (610) configured to transmit power to an electronic device (101) and an external electronic device connectable to the electronic device via at least one of a resonance charging technique or an inductive charging technique;
a transceiver configured to communicate with the electronic device (101) and the external electronic device; and
a controller, comprising processing circuitry, configured to control the power transmitter (610) and the transceiver,
wherein the controller is configured to:
receive a first request signal requesting transmission of battery charge state information of the external electronic device being charged by the wireless charger (205) from the electronic device (101);
control to transmit a second request signal requesting transmission of battery charge state information of the external electronic device to the external electronic device in response to the first request signal;
receive the battery charge state information of the external electronic device from the external electronic device in response to the second request signal; and
control to transmit the received battery charge state information to the electronic device (101).

12. The wireless charger (205) of claim 11, wherein the controller is configured to transmit a charge available state of the wireless charger (205) to the electronic device (101).

13. The wireless charger (205) of claim 12, wherein the battery charge state information of the external electronic device comprises at least one of identification information of the external electronic device or a battery voltage of the external electronic device, and
the charge available state comprises a state of at least one of an amount of power that may be provided by the wireless charger (205) or a remaining charging area of the wireless charger (205).

14. A method of providing a wireless charging guide, the method comprising:
determining whether an electronic device (101) is in a charging area of a wireless charger (205);
in response to a determination that the electronic device (101) is in the charging area, identifying at least one external electronic device that is currently connected to the electronic device (101) and/or which has a record of being previously connected to the electronic device;
acquiring battery charge state information regarding the identified at least one external electronic device; and
outputting a charging guide interface for the identified at least one external electronic device, based on a charge available state of the wireless charger (205) and the acquired battery charge state information.

15. A non-transitory computer-readable storage medium storing instructions that, when executed by a processor, cause the processor to perform the method of claim 14.
